**Europäisches Patentamt**

(19) **European Patent Office**

**Office européen des brevets**

(11) Veröffentlichungsnummer: **0 027 225**
**B1**

(12) **EUROPÄISCHE PATENTSCHRIFT**

(45) Veröffentlichungstag der Patentschrift:
**21.09.83**

(51) Int. Cl.³: **B 29 C 27/02**, B 23 B 5/16

(21) Anmeldenummer: **80106032.8**

(22) Anmeldetag: **04.10.80**

(54) Einrichtung zum Verschweissen von koaxial liegenden Rohren oder Fittings aus Kunststoff.

(30) Priorität: **11.10.79 CH 9164/79**

(43) Veröffentlichungstag der Anmeldung:
**22.04.81 Patentblatt 81/16**

(45) Bekanntmachung des Hinweises auf die Patenterteilung:
**21.09.83 Patentblatt 83/38**

(84) Benannte Vertragsstaaten:
**AT BE DE FR GB IT NL SE**

(56) Entgegenhaltungen:
**DE-A-2 249 317**
**GB-A-1 031 561**
**US-A-3 367 219**
**US-A-3 579 826**
**US-A-3 605 530**
**US-A-3 875 831**

(73) Patentinhaber: **GEORG FISCHER AKTIENGESELLSCHAFT**, Mühlentalstrasse 105, **CH-8201 Schaffhausen (CH)**

(72) Erfinder: **Benz, Gottlieb, Stox, CH-8890 Flums (CH)**
Erfinder: **Egg, Hans-Jakob, im Huebacker,**
**CH-8546 Ellikon (CH)**

Einrichtung zum Verschweissen von koaxial liegenden Rohren oder Fittings aus Kunststoff

Die Erfindung betrifft eine Einrichtung zum Verschweissen von koaxial liegenden Rohren oder Fittings aus Kunststoff mit auf Schlitten längsverschiebbaren Einspannvorrichtungen für die Rohre bzw. Fittings von denen eine mit dem eingespannten Rohr bzw. Fitting gegen das andere Rohr bzw. Fitting mit unterschiedlichem Druck andrückbar ist, mit einer parallel zur Schlittenführung längsverschiebbaren Heizvorrichtung dessen Heizspiegel zwischen die Einspannvorrichtungen einschwenkbar ist und mit einer längsverschiebbaren Fräseinrichtung mit zwei sich gegenüberliegenden und ebenfalls einschwenkbaren Fräswerkzeugen zum Planfräsen der Rohrenden.

Durch die QE-B2 2 212 055 ist eine Einrichtung der eingangs genannten Art bekannt geworden, welche nicht nur zum Stumpfschweissen von Rohren sondern auch zum Muffenschweissen von Rohren mit Fittings geeignet ist.

Hierfür sind an der Heizvorrichtung für die unterschiedlichen Rohrdurchmesser entsprechende Heizmuffen anbringbar. Die weiterhin angeordnete Fräseinrichtung ist jedoch nur zum Planfräsen von Rohrenden geeignet und dient zur Vorbereitung der Rohre für Stumpfschweissungen. Eine Vorbereitung der Rohre für eine Muffenschweissung, insbesondere eine Bearbeitung zwecks Kalibrierung der meist mit Übermass angelieferten Rohre und Beseitigung deren Oxydschicht ist mit dieser Einrichtung nicht möglich, weshalb hierfür getrennte Bearbeitungsvorrichtungen erforderlich sind, was den Arbeitsablauf verzögert und verteuert. Insbesondere die Beseitigung der durch UV-Lichteinwirkung entstandenen Oxydschicht kurz vor der Verschweissung ist sehr wichtig, da diese die Schweissung nachteilig beeinflusst.

Die bekannte Vorrichtung weist zur Verschiebung des Schlittens einen pneumatischen Zylinder auf, wodurch die Rohrenden programmgesteuert und zeitabhängig mit unterschiedlichem Druck aneinanderdrückbar sind, wobei der eingestellte Druck an Anzeigegeräten ablesbar ist.

Da derartige Einrichtungen vorwiegend an Baustellen verwendet werden, ist deren Einsatzbereich beschränkt, da oft keine Druckluft zur Verfügung steht oder zusätzliche Kompressoren erforderlich sind.

Ausserdem verliert die Einrichtung durch die automatische Steuerung die notwendige Robustheit und Einfachheit für einen Einsatz an Baustellen.

Andererseits weist die Einrichtung eine Einspannvorrichtung für die Rohre und Fittings auf, welche jeweils nur für einen bestimmten Rohrdurchmesser verwendbar ist, so dass eine grössere Anzahl Spannvorrichtungen zum Umrüsten bereit stehen müssen, um unterschiedliche Rohrdurchmesser verschweissen zu können.

Aufgabe der vorliegenden Erfindung ist die Schaffung einer Einrichtung der eingangs genannten Art, mittels welcher Muffen- als auch Stumpfschweissungen und die Vorbereitung der Rohre durch eine Bearbeitung für beide Schweissungsarten möglich ist, ohne dass vorher Arbeitsgänge mit zusätzlich notwendigen anderen Einrichtungen erforderlich sind.

Zur Lösung der Aufgabe sind die im kennzeichnenden Teil des Anspruches 1 angegebenen Gestaltungsmerkmale für die Erfindung vorgesehen.

Bevorzugte Ausführungsformen ergeben sich nach den weiteren Ansprüchen.

Das sich am Rohr selbst zentrierende Werkzeug für die Bearbeitung der Aussen- oder Innenoberfläche eines Rohrendes ermöglicht eine zur Rohrmitte zentrische Vorbereitung des Rohrendes zu einer Muffenverschweissung mit Fittings, wobei der Antrieb dieses Werkzeuges durch die bereits vorhandene Fräseinrichtung zum Planfräsen der Rohre erfolgt.

Durch die Ausbildung des Werkzeuges als Schäl-, Kalibrier- und Anfaswerkzeug ist eine Entfernung der Oxydschicht, eine Kalibrierung auf einen gewünschten Durchmesser und das Anbringen einer Fase am Rohrende in einem Arbeitsgang möglich, wobei durch unterschiedliche Ausbildung des Werkzeuges eine Bearbeitung vom Aussendurchmesser oder vom Innendurchmesser der Rohre möglicht ist.

Die Bearbeitungslänge am Rohr ist durch den Anschlag fest gegeben.

Die bajonettverschlussartig ausgebildete Mitnahmevorrichtung ermöglicht eine schnelle Montage bzw. Demontage des Rohrwerkzeuges und dessen Drehung bei radialer Zentrierung am Rohr.

Die am Gestell nur aufliegend angeordnete und über eine Druckmesseinrichtung in Längsrichtung abgestützte Zahnstange ermöglicht eine einfache und betriebssichere Messung des von Hand erzeugten Fügedruckes beim Schweissen, wobei der erzeugte Druck durch das Druckanzeigegerät leicht ablesbar ist.

Wird die Eichung der Skala entsprechend den bei den handelsüblichen Rohrdurchmessern erforderlichen Drücken vorgenommen, wobei dann die Skala die Rohrdurchmesser direkt anzeigt, kann bei der Bedienung auf zusätzliche Tabellenwerte verzichtet werden.

Der am Schlitten einschwenkbare Anschlag ermöglicht das Einspannen des Fittings in der erforderlichen richtigen Längsposition.

Nachstehend wird die Erfindung anhand eines in der Zeichnung dargestellten Ausführungsbeispieles näher erläutert.

Es zeigen:

Fig. 1 eine perspektivische Darstellung einer Einrichtung zum Verschweissen mit einem Werkzeug für die Bearbeitung der Aussen - oder Innenoberfläche eines Rohrendes

Fig. 2 eine vergrösserte perspektivische Teilansicht des Werkzeuges vor der Befestigung am Fräswerkzeug

Fig. 3 eine vergrösserte perspektivische Teilansicht auf das Fräswerkzeug mit dem Werkzeug
für die Bearbeitung der Aussen- oder Innenoberfläche, und

Fig. 4 eine vergrösserte Draufsicht auf die Einspannvorrichtung mit einem Fitting und der eingeschwenkten Fräseinrichtung.

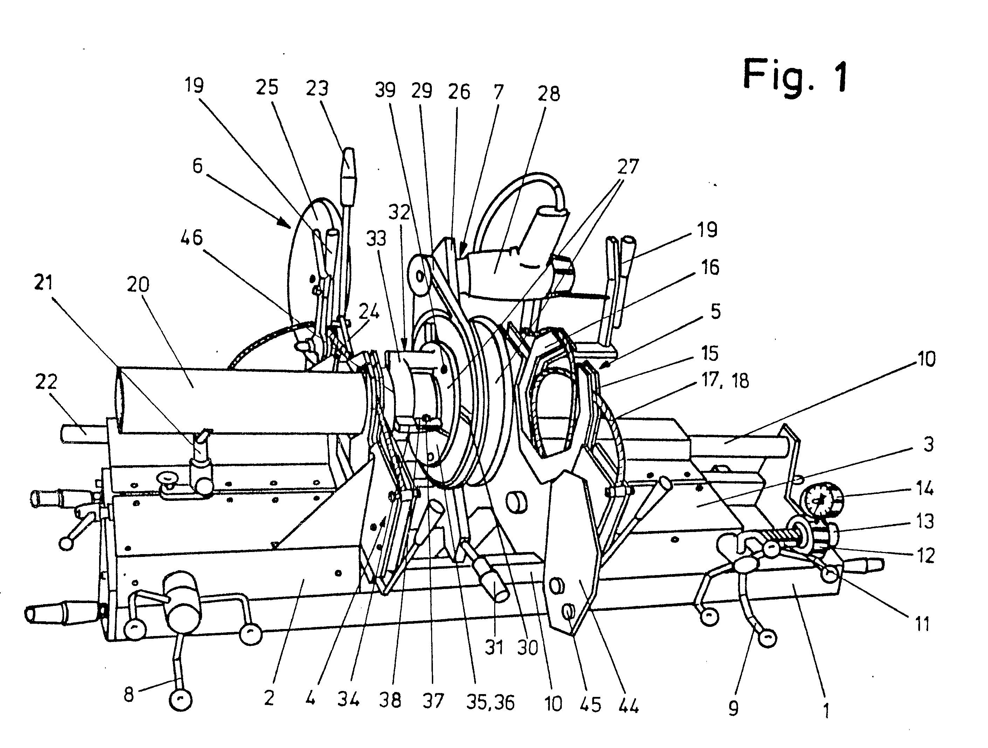

Wie aus Fig. 1 ersichtlich, besteht die Einrichtung aus einem Gestell 1, aus zwei darauf angeordneten Schlitten 2 und 3, von denen mindestens einer längsverschiebbar ist, aus zwei auf
den Schlitten 2 und 3 befestigten Einspannvorrichtungen 4 und 5, einer Heizeinrichtung 6 und
einer Fräseinrichtung 7. Wie dargestellt, ist der
rechte Schlitten 3 mittels dem als Schaltstern
ausgebildeten Handgriff 9 von Hand auf Führungen 10 verschiebbar gelagert. Mittels dem
Handgriff 9 ist ein weiter nicht dargestelltes
Zahnrad verdrehbar, welches in eine Zahnstange
11 eingreift.

Die Zahnstange 11 ist am Gestell 1 lose aufliegend und seitlich geführt angeordnet und über
eine Druckmesseinrichtung 12 in deren Längsrichtung an einem Lagerbock 13 des Gestells
1 abgestützt. Die Druckmesseinrichtung 12 weist
ein Druckanzeigegerät 14 auf, dessen Skala vorzugsweise entsprechend den bei handelsüblichen Rohrdurchmessern erforderlichen
Schweissdrücken geeicht ist.

Die beiden gleich ausgebildeten Einspannvorrichtungen 5 und 6 bestehen jeweils aus zwei
gleichzeitig horizontal verschiebbaren Zentrierbacken 15 und 16 und einer ein Seil 17 aufweisenden Umschlingungsspannvorrichtung 18, welche durch einen Handhebel 19 betätigbar ist. Mit
diesen Einspannvorrichtungen 5, 6 können wie
gezeichnet Rohre 20 als auch Fittings wie z.B.
Muffen, T-Stücke und Bogenstücke zueinander
koaxial und gegen axiales Verschieben sicher
eingespannt werden, wobei durch deren schmale
Bauweise auch Fittings mit kurzen zylindrischen
Partien wie z.B. Winkel-Stücke sicher einspannbar sind. Durch die mehr als 360° erfolgende
Umschlingung des Rohres 20 mittels dem Seil 17
werden auch leicht ovale bzw. unrunde Rohre
für die nachfolgende Bearbeitung und Schweissung rund gerichtet. Zur Abstützung der Rohre
20 bzw. Fittings sind auf den Schlitten 2 und 3
verstellbare Abstützelemente 21 angeordnet. Die
Heizeinrichtung 6 ist auf einer hinter den Schlitten 2 und 3 durchlaufenden Führungssäule 22
längsverschiebbar und weist einen mittels eines
Hebels 23 betätigbaren Schwenkarm 24 auf, an
welchem ein Heizspiegel 25 befestigt ist. Durch
den Hebel 23 ist der Heizspiegel 25 zwischen die
zu verschweissenden Rohre 20 bzw. Fittings 20a
schwenkbar.

Beim Muffenschweissen sind weiter nicht dargestellte Heizmuffen am Heizspiegel 25 anschraubbar.

Die Fräseinrichtung 7 ist ebenfalls auf der
Führungssäule 22 längsverschiebbar und weist
einen Schwenkarm 26 auf, an welchem zwei sich
gegenüberliegende Fräswerkzeuge 27 gemeinsam drehbar gelagert sind. Die Fräswerkzeuge
27 sind durch einen Elektromotor 28 und einen
Riementrieb 29 antreibbar. Die als Scheiben ausgebildeten Fräswerkzeuge 27 dienen zum Planfräsen der Enden von stumpf zu verschweissenden Rohren 20 bzw. Fittings und weisen an ihren
Aussenseiten auswechselbare Fräsmesser 30
auf. Am Schwenkarm 26 ist ein Handhebel 31
befestigt, mittels welchem die Fräswerkzeuge 27
aus einer hinten liegenden Ruhestellung in eine
Arbeitsstellung zwischen den Einspannvorrichtungen 4 und 5 verschwenkbar sind.

Am feststehenden Schlitten 2 ist ein als Radstern ausgebildeter Handgriff 8 angeordnet, mittels welchem über eine weiter nicht dargestellte
Verstelleinrichtung die Heizeinrichtung 6 und die
Fräseinrichtung 7 gemeinsam auf der Führungssäule 22 in Längsrichtung verschoben werden.

Für die Vorbereitung der Rohrenden zum
Muffenverschweissen mit Fittings ist eine Aussenbearbeitung der Rohrenden erforderlich. Dies
erfolgt mittels eines an einem der Fräswerkzeuge 27 befestigten Werkzeug 32 für die Aussen- oder Innenoberfläche des Rohrendes. Das
als Schäl- Kalibrier- und Anfaswerkzeug ausgebildete Werkzeug 32 weist einen Zentrierring
33 auf, welcher mittels Stegen 34 mit einer
gleichzeitig als Anschlag 35 für das Rohr 20
ausgebildeten Befestigungsplatte 36 verbunden
ist. An den Stegen 34 sind mittels Schrauben 37
auswechselbar Schneidplatten 38 befestigt, welche gleichzeitig eine Anfas-Schneide aufweisen.
Vorzugsweise sind umfangsmässig drei Schneidplatten 38 angeordnet, mittels welchen der Rohrdurchmesser auf ein eingestelltes Mass geschält,
kalibriert und gleichzeitig am Rohrende angefast
wird.

Das auf dem rohen Rohraussendurchmesser
mittels des Zentrierringes 33 sich selbst zentrierende Werkzeug 32 wird mittels einer Mitnahmevorrichtung 39 mit dem Fräswerkzeug 27
in Drehrichtung wirkverbunden.

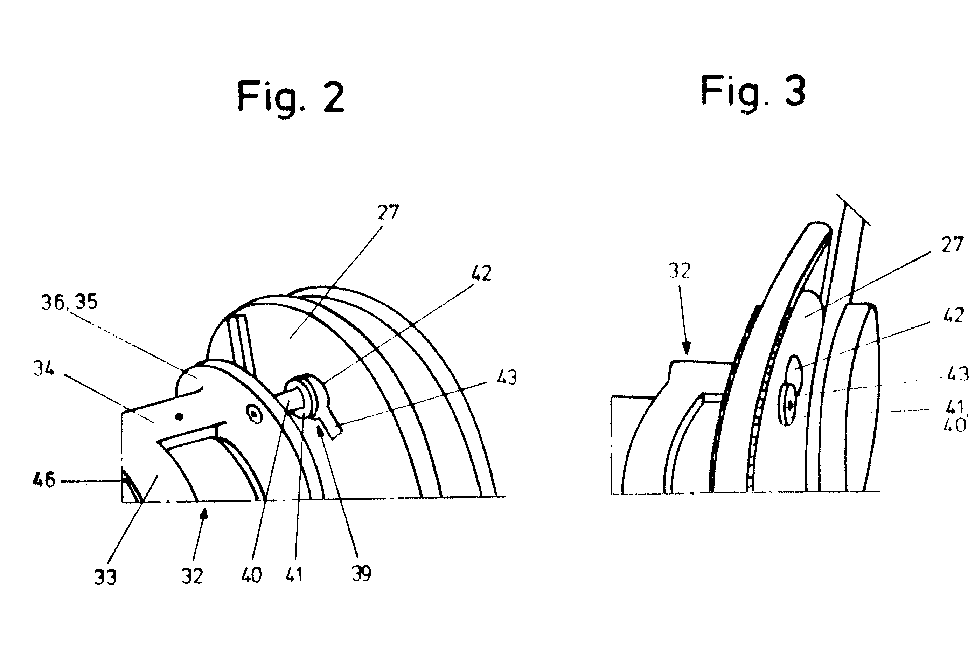

Aus den Fig. 2 und 3 ist die bajonettverschlussartig ausgebildete Mitnahmevorrichtung
39 näher ersichtlich. Diese besteht aus mindestens drei an der Befestigungsplatte 36 angeordneten, mit einem Bund 41 versehenen Bolzen
40 und aus im Fräswerkzeug 27 angeordneten
Bohrungen 42 mit von diesen ausgehend umfangsmässig verlaufenden Schlitzen 43.

Wie aus Fig. 2 ersichtlich, werden bei Montage
des Werkzeuges 32 die Bolzen 40 durch die
Bohrungen 42 gesteckt und das Werkzeug gegen
die Drehrichtung des Fräswerkzeuges 27 verdreht, wodurch die Bolzen 40 in den Schlitzen
43 zu liegen kommen und wie aus Fig. 3 ersichtlich der Bund 41 jedes Bolzens 40 an der Rückseite des Fräswerkzeuges 27 anliegt. Somit wird
das Werkzeug 32 gehalten, wobei die Drehmitnahme durch Anlage des Bolzens 41 am Ende
des Schlitzes 43 erfolgt. Da die Breite des
Schlitzes 43 grösser ist als der Durchmesser des
Bolzens 40, ist eine Selbstzentrierung des Werkzeuges 32 auf dem Rohr 20 gewährleistet. Dadurch erübrigt sich eine zur Rohrachse genaue zentrische Einstellung des Fräswerkzeuges 27.

Sollen Rohre mit ihrem Innendurchmesser mit dem Aussendurchmesser von Formstücken verschweisst werden, ist eine vorangehende Bearbeitung und Kalibrierung des Rohrinnendurchmessers erforderlich. Dies kann mit einem entsprechend ausgebildeten Werkzeug 32 erfolgen, welches einen Zentrierring zur Zentrierung im Rohrinnendurchmesser, Schneidmesser zur Innenbearbeitung und Anfasung des Rohres und einen Anschlag zur Festlegung der Bearbeitungslänge aufweist.

Zur massgerechten Einspannung des zu verschweissenden Fittings weist der verschiebbare Schlitten 3 einen einschwenkbaren Anschlag 44 auf, welcher im eingeschwenkten Zustand mittels daran angeordneten Magneten 45 an der Stirnseite der Einspannvorrichtung 5 gehalten wird.

Der Arbeitsablauf für eine Muffenschweissung ist wie folgt: Der Fitting wird mittels der Einspannvorrichtung 5 auf dem beweglichen Schlitten 3 festgespannt, wobei zum Ausrichten des Fittings in Längsrichtung der Anschlag 44 eingeschwenkt wird und nach der Festspannung wieder ausgeschwenkt wird.

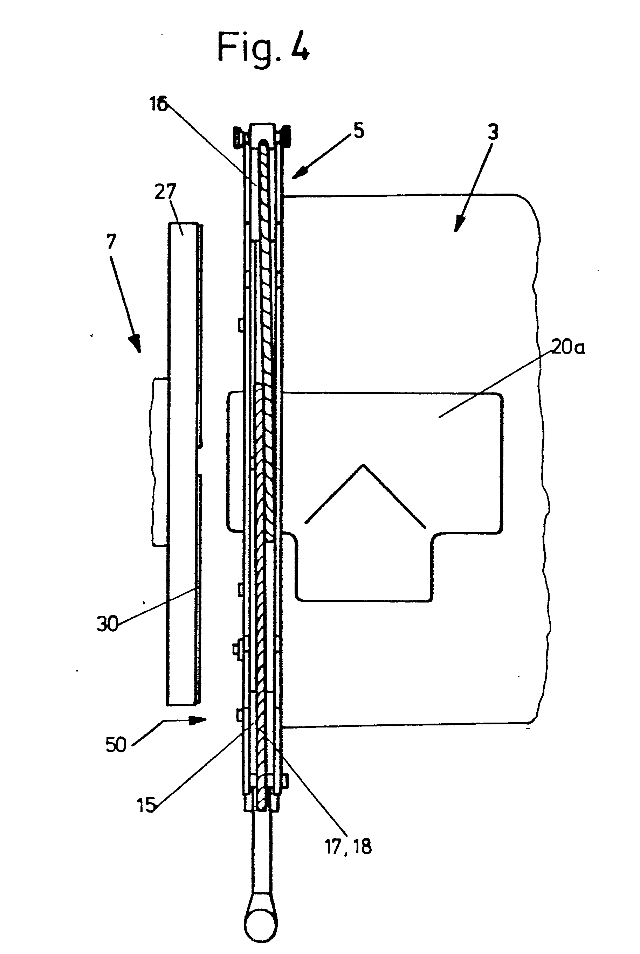

Es besteht auch die Möglichkeit auf den einschwenkbaren Anschlag 44 zu verzichten und die Längseinstellung des Fittings 20a mit dem einschwenkbaren und längsverschiebbaren Fräswerkzeug 27 vorzunehmen. Hierzu wird wie aus Fig. 4 ersichtlich der Fitting 20a mittels der Einspannvorrichtung 5 auf dem beweglichen Schlitten 3 in beliebiger Lage eingespannt. Anschliessend wird die Fräseinrichtung 7 eingeschwenkt und axial in Richtung des Pfeils 50 verschoben. Bei gelockerter Spannung des Fittings 20a wird dieser durch die Fräsmesser 30 des noch nicht rotierenden und als Anschlag wirkenden Fräsers 27 ebenfalls in Richtung des Pfeiles 50 in den Zentrierbacken 15, 16 verschoben bis er die richtige axiale Lage für die spätere Verschweissung einnimmt, welche durch das Anschlagen der Fräsmesser 30 an der Stirnfläche der Einspannvorrichtung 5 bzw. der Zentrierbacken 15, 16 gegeben ist. Nach dem Festziehen des Seiles 17 zur Spannung des Fittings 20a kann die Fräseinrichtung 7 wieder zurückgeschwenkt werden.

Auf dem feststehenden Schlitten 2 wird mittels der Einspannvorrichtung 3 das Rohr 20 eingespannt und das Werkzeug 32 mit dem Zentrierring 33 auf das Rohr 20 gesteckt. Anschliessend wird das Fräswerkzeug 27 eingeschwenkt und das Werkzeug 32 wie bereits beschrieben mit dem Fräswerkzeug mittels der Mitnahmevorrichtung 39 verbunden. Der Elektromotor 28 wird eingeschaltet und das Rohrende am Aussendurchmesser bzw. Innendurchmesser bearbeitet. Hierbei wird die Fräseinrichtung 7 mit dem Handgriff 8 soweit in Richtung Rohr verschoben, bis das Rohrende an der als Anschlag 35 wirkenden Befestigungsplatte 36 anliegt. Dabei wird gleichzeitig eine Anfasung am Rohrende angebracht, welche entweder als ein zylindrischer Absatz oder als eine schräge Fläche ausgebildet sein kann. Anschliessend wird die Festspannung des Rohres 20 durch Lockerung des Seiles 17 etwas gelöst und das Rohr durch Verschieben der Fräseinrichtung 7 soweit zurückgeschoben, bis die äussere Stirnfläche 46 des Werkzeuges an der Stirnfläche der Einspannvorrichtung 4 anliegt. Dadurch wird das Rohr 20 in die für das Verschweissen erforderliche richtige axiale Lage gebracht.

Nach dem Wieder-Festspannen des Rohres wird das Werkzeug 32 vom Fräswerkzeug 27 losgekuppelt, das Fräswerkzeug in die Ausgangslage zurückgeschwenkt und das Werkzeug 32 vom Rohr 20 abgenommen. Durch Verschieben des Schlittens 2 kann kontrolliert werden, ob Rohr und Fitting aufeinander passen. Nach Zurückfahren des Schlittens 2 wird in bekannter Weise der Heizspiegel 25 mit den daran befestigten Heizmuffen eingeschwenkt wonach durch Längsverschiebung der Heizeinrichtung 6 der Büchsenteil der Heizmuffe über das Rohr und der Fitting durch Verschieben des Schlittens 3 in den Stutzenteil der Heizmuffe geschoben werden. Nach abgelaufener Anwärmzeit werden Schlitten und Heizeinrichtung rasch auseinandergefahren, der Heizspiegel zurückgeschwenkt und der Schlitten 3 mit dem Fitting 20a auf das Rohr 20 gefahren.

Weiter nicht dargestellte Anschläge an den Schlitten 2 und 3 ergeben im Zusammenhang mit der beschriebenen axialen Einstellung des Rohres 20 und des Fittings 20a die zueinander richtige Lage von Rohr und Fitting nach der Schweissung und eine optimale Schweissverbindung.

Nach Ablauf der Abkühlzeit werden die Seile 4 gelöst, die Zentrierbacken 15, 16 auseinandergefahren und das verschweisste Teil herausgenommen.

Das Stumpfschweissen zweier Rohre kann in bekannter Weise ebenfalls mit dieser Einrichtung durchgeführt werden, wobei vor dem Heizvorgang mittels des Heizspiegels 25 beide Rohrenden mittels den Fräswerkzeugen 27 plan gefräst werden.

Der für den gerade zu verschweissenden Rohrdurchmesser bzw. Fittingdurchmesser erforderliche Fügedruck ist direkt gemäss der Skala des Druckanzeigegerätes einstellbar und wird von Hand durch Druck an dem Handgriff 9 aufgebracht. Nach Ablauf der Abkühlzeit wird der Fügedruck gelöst, und das verschweisste Teil nach Lösen der Spannseile und Öffnen der Zentrierbacken herausgenommen.

Die erfindungsgemässe Einrichtung ist somit universell ohne zusätzlich erforderliche Geräte verwendbar, wobei durch die fest gegebenen Anschläge am Schlitten und am Endenbearbeitungswerkzeug sowie die leichte Einstellbarkeit und Kontrollierbarkeit des Fügedruckes diese leicht und ohne Fehleinstellungen bedienbar ist.

## Patentansprüche

1. Einrichtung zum Verschweissen von koaxial liegenden Rohren (20) oder Fittings (20a) aus Kunststoff mit auf Schlitten (2, 3) längsverschiebbaren Einspannvorrichtungen (4, 5) für die Rohre bzw. Fittings von denen ein mit dem eingespannten Rohr bzw. Fitting gegen das andere Rohr bzw. Fitting mit unterschiedlichem Druck andrückbar ist, mit einer parallel zur Schlittenführung längsverschiebbaren Heizeinrichtung (6), deren Heizspiegel (25) zwischen die Einspannvorrichtungen (4, 5) einschwenkbar ist und mit einer längsverschiebbaren Fräseinrichtung (7) mit zwei sich gegenüberliegenden und ebenfalls einschwenkbaren Fräswerkzeugen (27) zum Planfräsen der Rohrenden, dadurch gekennzeichnet, dass ein sich am Rohr (20) selbstzentrierendes Werkzeug (32) für die Bearbeitung der Aussen- oder Innenoberfläche eines Rohrendes mittels einer Mitnahmevorrichtung (39) an mindestens einem der Fräswerkzeuge (27) befestigbar ist.

2. Einrichtung nach Anspruch 1, dadurch gekennzeichnet, dass das Werkzeug (32) zur Bearbeitung des Rohraussendurchmessers ausgebildet ist.

3. Einrichtung nach Anspruch 1, dadurch gekennzeichnet, dass das Werkzeug (32) zur Bearbeitung des Rohrinnendurchmessers ausgebildet ist.

4. Einrichtung nach Anspruch 2 oder 3, dadurch gekennzeichnet, dass das Werkzeug (32) als Schäl-, Kalibrier- und Anfaswerkzeug ausgebildet ist.

5. Einrichtung nach einem der Ansprüche 1 bis 4, dadurch gekennzeichnet, dass das Werkzeug (32) einen Zentrierring (33), mindestens eine auswechselbare Schneidplatte (38) und einen auf der Seite der Mitnahmevorrichtung (39) angeordneten stirnseitigen Anschlag (35) aufweist.

6. Einrichtung nach Anspruch 5, dadurch gekennzeichnet, dass die an der Zentrierringseite des Werkzeuges (32) angeordnete Stirnfläche (46) als Anschlag zur Längseinstellung des Rohres (20) ausgebildet ist.

7. Einrichtung nach einem der Ansprüche 1 bis 6, dadurch gekennzeichnet, dass die Mitnahmevorrichtung (39) bajonettverschlussartig ausgebildet ist.

8. Einrichtung nach Anspruch 7, dadurch gekennzeichnet, dass an einer Befestigungsplatte (36) des Werkzeuges (32) mindestens drei mit einem Bund (41) versehene Bolzen (40) angeordnet sind, welche durch Bohrungen (42) des Fräswerkzeuges (27) steckbar und in Drehrichtung des Fräswerkzeuges (27) verlaufenden Schlitzen (43) mit radialem Spiel gehalten sind.

9. Einrichtung nach Anspruch 1 mit einer für die Verschiebung mindestens eines der beiden Schlitten (2, 3) am Gestell (1) angeordneten Zahnstange (11), dadurch gekennzeichnet, dass die Zahnstange (11) am Gestell (1) lose aufliegend und seitlich geführt angeordnet ist und über eine Druckmesseinrichtung (12) in Längsrichtung am Gestell (1) abgestützt ist.

10. Einrichtung nach Anspruch 9, dadurch gekennzeichnet, dass die Druckmesseinrichtung (12) mit einem Druckanzeigegerät (14) versehen ist.

11. Einrichtung nach Anspruch 10, dadurch gekennzeichnet, dass der Druckanzeigegerät (14) mit einer Skala entsprechend der zu verschweissenden Rohrdurchmesser versehen ist.

12. Einrichtung nach einem der Ansprüche 1 bis 11, dadurch gekennzeichnet, dass am verschiebbaren Schlitten (3) stirnseitig ein einschwenkbarer Anschlag (44) angeordnet ist, welcher in eingeschwenkter Lage mittels daran angeordneten Magneten (45) an der Stirnseite der am Schlitten (3) angeordneten Einspannvorrichtung (5) festklemmbar ist.

13. Einrichtung nach einem der Ansprüche 1 bis 11, dadurch gekennzeichnet, dass mindestens eines der einschwenkbaren und längsverschiebbaren Fräswerkzeuge (27) als Anschlag dient und zur Längseinstellung des zu verschweissenden Fittings (20a) an den Zentrierbacken (15, 16) zur Anlage bringbar ist.

## Revendications

1. Dispositif de soudage de tuyaux (20) ou manchons (20a) coaxiaux en matière plastique, comportant des dispositifs de serrage (4, 5) des tubes ou manchons qui sont déplaçables longitudinalement sur des chariots (2, 3) et dont un dispositif portant le tube ou manchon serré peut être appliqué contre l'autre tube ou manchon avec une pression différente, un dispositif de chauffage (6) déplaçable longitudinalement et parallèlement à un guide de chariot et dont le miroir chauffant (25) peut être amené par pivotement entre les dispositifs de serrage (4, 5), ainsi qu'un dispositif de fraisage (7) déplaçable longitudinalement et comportant deux outils de fraisage (27), placés l'un en regard de l'autre, pouvant également pivoter vers l'intérieur et servant au fraisage plan des extrémités de tubes, caractérisé en ce qu'un outil (32) se centrant automatiquement sur le tube (20) et servant à l'usinage des surfaces extérieure ou intérieure d'une extrémité de tube peut être fixé au moyen d'un dispositif d'entrainement (39) sur au moins un des outils de fraisage (27).

2. Dispositif selon la revendication 1, caractérisé en ce que l'outil (32) est agencé pour l'usinage du diamètre extérieur de tube.

3. Dispositif selon la revendication 1, caractérisé en ce que l'outil (32) est agencé pour l'usinage du diamètre intérieur de tube.

4. Dispositif selon l'une des revendications 2 ou 3, caractérisé en ce que l'outil (32) est agencé sous la forme d'un outil d'écroûtage, de calibrage et de chanfreinage.

5. Dispositif selon l'une des revendications 1 à 4, caractérisé en ce que l'outil (32) comporte une bague de centrage (33), au moins une plaque de coupe (38) amovible et une butée frontale (35) placée sur le côté du dispositif d'entrainement (39).

6. Dispositif selon la revendications 5, caractérisé en ce que la surface frontale (46) disposée du côté de la bague de centrage de l'outil (32) est agencée sous forme d'une butée de réglage longitudinal du tube (20).

7. Dispositif selon l'une des revendications 1 à 6, caractérisé en ce que le dispositif d'entrainement (39) est agencé à la façon d'une fermeture à baïonnette.

8. Dispositif selon la revendication 7, caractérisé en ce qu'il est prévu sur une plaque de fixation (36) de l'outil (32) au moins trois broches (40) pourvues d'un collet (41), qui peuvent être emmanchées dans des trous (42) de l'outil de fraisage (27) et qui sont maintenues avec un jeu radial dans des fentes (43) orientées dans le sens de rotation de l'outil de fraisage (27).

9. Dispositif selon la revendication 1, comportant une crémaillère (11) disposée sur le bâti (1) pour le déplacement d'au moins un des deux chariots (2, 3), caractérisé en ce que la crémaillère (11) est disposée de manière à s'appuyer librement sur le bâti (1) et à être guidée latéralement, et en ce qu'elle est soutenue sur le bâti (1) dans une direction longitudinale par l'intermédiaire d'un dispositif de mesure de pression (12).

10. Dispositif selon la revendication 9, caractérisé en ce que le dispositif de mesure de pression (12) est pourvu d'un appareil indicateur de pression (14).

11. Dispositif selon la revendication 10, caractérisé en ce que l'appareil indicateur de pression (14) est pourvu d'une échelle correspondant au diamètre de tube à souder.

12. Dispositif selon l'une des revendications 1 à 11, caractérisé en ce qu'il est prévu sur un chariot mobile par translation (3), sur le côté frontal, une butée (44) pouvant pivoter vers l'intérieur et qui peut être bloquée dans la position de pivotement à l'aide d'un aimant (45) disposé sur celle-ci sur le côté frontal du dispositif de serrage (5) monté sur le chariot (3).

13. Dispositif selon l'une des revendications 1 à 11, caractérisé en ce qu'au moins un des outils de fraisage (27) pouvant pivoter vers l'intérieur et pouvant être déplacé longitudinalement sert de butée et peut être appliqué contre les mâchoires de centrage (15, 16) en vue d'un réglage longitudinal du manchon à souder (20a).

**Claims**

1. Apparatus for welding coaxially arranged plastics tubes (20) or fittings (20a), having clamping devices (4, 5) for the tubes or respectively fittings, which are longitudinally displaceable on slide bars (2, 3), and of which one can be pressed with the clamped-in tube or fitting against the other tube or fitting with varying pressures, having a heating device (6) which is longitudinally displaceable parallel to the slide guide and whose heating mirror (25) can be pivoted into position between the clamping devices (4, 5), and having a longitudinally displaceable milling device (7) with two opposite and likewise pivotable milling tools (27) for face-milling the tube ends, characterised in that a tool (32), which self-centres on the tube (20), for machining the outer or inner surface of a tube end can be secured by means of a carrier device (39) to at least one of the milling tools (27).

2. Apparatus according to claim 1, characterised in that the tool (32) is designed for machining the external diameter of the tube.

3. Apparatus according to claim 1, characterised in that the tool (32) is designed for machining the inner diameter of the tube.

4. Apparatus according to claim 2 or 3, characterised in that the tool (32) is designed as a rough-turning, calibrating and chamfering tool.

5. Apparatus according to one of the claims 1 to 4, characterised in that the tool (32) comprises an eccentric ring (33), at least one exchangeable cutting plate (38) and a frontal stop (35) arranged on the side of the carrier device (39).

6. Apparatus according to claim 5, characterised in that the frontal face (46) acting as a stop arranged on the eccentric ring side of the tool (32) is designed to adjust the linear position of the tube (20).

7. Apparatus according to one of the claims 1 to 6, characterised in that the carrier device (39) has the form of a bayonet lock.

8. Apparatus according to claim 7, characterised in that there are arranged on a fastening plate (36) of the tool (32) at least three pins (40) provided with a collar (41), which can be pushed through bores (42) in the milling tool (27) and are secured with space for radial play in slots (43) running in the direction of rotation of the milling tool (27).

9. Apparatus according to claim 1 having a toothed rack (11) arranged on the frame (1) for displacing at least one of the two slide bars (2, 3), characterised in that the toothed rack (11) rests on the frame (1), is guided laterally, and is supported on the frame (1) in a longitudinal direction by means of a pressure gauge (12).

10. Apparatus according to claim 9, characterised in that the pressure gauge (12) is provided with a pressure indicator (14).

11. Apparatus according to claim 10, characterised in that the pressure indicator (14) is provided with a scale corresponding to the diameter of the tube to be welded.

12. Apparatus according to one of the claims 1 to 11, characterised in that there is arranged on the frontal side of the displaceable slide bar (3) a pivotable stop (44), which can be clamped and fixed by means of magnets (45) arranged on it into the pivoted position on the frontal side of the clamping device (5) arranged on the slide bar (3).

13. Apparatus according to one of the claims 1 to 11, characterised in that at least one of the pivotable and longitudinally displaceable milling tools (27) serves as a stop and can be brought into abutment against the centering jaws (15, 16) for the longitudinal adjustment of the fitting (20a) to be welded.

Fig. 1

Fig. 3

Fig. 2

# Fig. 4